# EUROPEAN PATENT SPECIFICATION

(11) **EP 1 380 132 B1**
(45) Date of publication and mention of the grant of the patent: **15.02.2006**
(21) Application number: 02727552.8
(22) Date of filing: 10.04.2002
(51) Int. Cl.: H04L 12/00

(54) **COLLECTION OF DATA FROM REMOTE TERMINAL UNITS BEING CONNECTED TO INTERNET-READY COMMUNICATION MODULES**
SAMMLUNG VON DATEN VON ENTFERNTEN TERMINALS DIE MIT FERTIGEN INTERNET-KOMMUNIKATIONSMODULEN VERBUNDEN SIND
MODULES DE COMMUNICATION PRETS POUR L'UTILISATION SUR L'INTERNET

(30) Priority: 11.04.2001 US 283131 P; 22.10.2001 US 37092
(43) Date of publication of application: 14.01.2004
(73) Proprietor: TELEFONAKTIEBOLAGET LM ERICSSON (publ), 164 83 Stockholm (SE)
(72) Inventor: JANEZ GONZALEZ, Javier, E-48901 Baracaldo (ES); MARTINEZ LEBENA, Alberto Juan, E-39005 Santander (ES)
(74) Representative: O'Connell, David Christopher
(86) International application number: PCT/EP2002/003991
(87) International publication number: WO 2002/084946

(56) References cited:
- EP-A- 1 028 561
- US-A- 5 720 770

## Description

### BACKGROUND OF THE INVENTION

### Technical Field of the Invention

The invention is related to collection of data from remote terminal units and, more particularly, to a method and system of collecting data from the remote terminal units and controlling the remote terminal units using the Internet.

### Description of the Related Art

Remote terminal units, such as remote monitoring units and remote measuring units, are devices that allow the monitoring and measuring of peripherals instruments such as sensors, alarms, power meters, and the like, that are remotely located. Remote terminal units may also refer to remote controller units that are used, for example, to control traffic lights and other similar peripheral devices. For purposes of this description, the term "remote terminal units" (RTU) is used to refer to all such remote measurement, monitoring, and controller units. These remote terminal units communicate with, and are controlled by, a central control system that collects data from the remote terminal units. The type of data collected may include municipal utility data such as kilowatts of electricity or other types of data such as alarm or sensor data. In addition to collecting data, the control system can also order the remote terminal units to perform specific actions such as, for example, shutting off the electricity, or resetting the sensor or alarm system. The remote terminal units may then control the peripherals instruments in accordance with the received commands.

Generally, there are two ways of collecting the measurement or sensor data from the remote terminal units. One way calls for operators to manually access the remote terminal units, read the data therefrom, and carry the data back to the central office to be compiled and processed. A number of difficulties are involved with this method, however, including being slow and tedious, inefficient, as well as offering little or no real-time information.

Another way to collect the measurement or sensor data is to transmit the data from the remote terminal units to the central control unit. Such communications have historically been performed via land lines and analog modems. More recently, wireless communication services such as circuit switched data (CSD) and short message service (SMS), based on, for example, the Global System for Mobile Communication (GSM), have been employed to transmit the data via wireless communication modules.

In general, a communication module is a device that can be connected to an external or host device such as a remote terminal unit for the purpose of sending and receiving data. Communication modules typically lack any man-to-machine interface (MMI) such as a display or keyboard, as these modules are intended primarily for M2M (Machine-to-Machine) communications where the presence of a human operator is not needed. Interaction with these modules is typically carried out through a serial communication port such as a UART (Universal Asynchronous Receiver Transmitter) port. Examples of communication modules may include various types of modems and the like.

A wireless communication module is a communication module that is capable of communicating over a radio frequency interface. The wireless communication modules employ one or more different wireless bearer services such as CSD or SMS to transmit and receive data. Such an arrangement has a number of advantages including accessibility, mobility, and ubiquity of the communication module. Examples of wireless communication modules may include various types of wireless modems and the like.

Presently available wireless communication modules, however, are not well suited for access to the Internet. A wireless communication module with SMS capability, for example, must first connect to an SMS Center (SMSC), then to an Internet Service Provider (ISP), before connecting to a server on the Internet. Any response to the communication module is sent from the Internet server back through the ISP, the SMSC, then to the wireless communication module. This arrangement lacks a direct data path between the communication module and the Internet server and may result in some delays or latency between the time when the data is transmitted and the time when the data is received.

For CSD service, a direct connection to the Internet server may be provided through an ISP in a manner similar to the way a data call is established in the Public Switched Telephone Network (PSTN). However, for CSD service, usually there is a need for a communication protocol to be implemented on both sides of the connection in order to effect the data transfer. For example, a protocol is needed to handle transmission errors and recovery therefrom, to negotiate data flow control, and to generally carry out the data transmission in an orderly way.

Accordingly, it is desirable to be able to provide a system and method for collecting data from remote terminal units and for controlling the remote terminal units using communication modules that are capable of direct, bearer service and access network independent connection to the internet.

JP 2000-253076 discloses a method and system for using a cellular telephone as a network gateway in an automobile network by performing route designation of a received packet to one of the packets through a telephone, an automobile network, and a telephone or an external network. In the path of an incoming packet from a radio air link when a telephone undergoes plug connection to a network through an adapter, an inbound packet and a cellular MAC layer are eliminated by an encoder/decoder and transferred to a vehicle adapter. The adapter executes a route designation function and performs route designation of a packet to a wired vehicle network in accordance with a destination address in the incoming packet or returns the packet to a protocol stack in the cellular telephone. The adapter receives a packet which is directed to the telephone and is from the vehicle network, and a route is designated to the protocol stack.

US 6,181,994 discloses a method and system for vehicle initiated delivery of advanced diagnostics based on the determined need by vehicle. Advanced diagnostics can be loaded into a vehicle on demand with results being sent back to the diagnostic centre, possibly requiring a more refined selection of diagnostics based on the results of the previous tests. Thus, network vehicle communications with diagnostic centres, via cellular telephone, wireless communications and Internet access via wireless communication link, provide a networking topology that allows onboard computers or microprocessors to obtain problem diagnosis information and data while on the road.

### SUMMARY OF THE INVENTION

The present invention is directed to a method and system for collecting data from remote terminal units, a method of operating a communication module connected to a remote terminal unit, and a communication module, all according to the independent claims.

In general, in one aspect, the invention is directed to a method of collecting data from a plurality of remote terminal units using the Internet. The method comprises providing the data from each remote terminal unit to a communication module connected to the remote terminal unit, the communication module having an Internet or Internet-like client application executing thereon. The method further comprises conforming the data to an Internet or Internet-like protocol via the Internet or Internet-like client application and transmitting the data in accordance with the Internet or Internet-like protocol via the communication module to an Internet server. The data is thereafter stored in a database of the Internet server, and an acknowledgment message is issued from the Internet server to the remote terminal unit via the communication module.

In general, in another aspect, the invention is directed to a system of collecting data from a plurality of remote terminal units using the Internet. The system comprises an Internet server configured to receive the data from the plurality of remote terminal units and to issue acknowledgement messages to the remote terminal units. A database is connected to the internet server and adapted to store the data received by the Internet server. The system further comprises a communication module connected to each remote terminal unit and configured to transmit the data in accordance with an internet or Internet-like protocol to the Internet server. An Internet or Internet-like client application residing in the communication module is configured to conform the data to the Internet or Internet-like protocol.

In general, in still another aspect, the invention is directed to a method of operating a communication module connected to a remote terminal unit to control the remote terminal unit using Internet or Internet-like protocols, the method comprising establishing a connection between the communication module and an Internet server in accordance with an Internet or Internet-like protocol; receiving an instruction message from the Internet server over the connection; processing the instruction message using an Internet or Internet-like client application executing on said communication module; and providing a content of the instruction message to the remote terminal unit.

In general, in yet another aspect, the invention is directed to a communication module for connection to a remote terminal unit so that the remote terminal unit is controlled using Internet or Internet-like protocols, the communication module comprising: a transceiver unit configured to establish a connection between the remote terminal unit and an Internet server in accordance with an Internet or Internet-like protocol; and a control unit having an Internet or Internet-like client application executing therein, the application being configured to process an instruction message received from the Internet server over the connection and provide a content of the instruction message to the remote terminal unit. Various embodiments are defined by the dependent claims.

### BRIEF DESCRIPTON OF THE DRAWINGS

A more complete understanding of the present invention may be had from the following detailed description when taken in conjunction with the accompanying drawings, wherein:
Figure 1 illustrates a system of collecting data from a plurality of remote terminal units according to some embodiments of the invention;
Figure 2 illustrates a remote terminal unit including an Internet-ready communication module according to some embodiments of the invention;
Figure 3 illustrates a comparison of the OSI protocol stack versus the WAP protocol stack;
Figure 4 illustrates a method of collecting data from a plurality of remote terminal units according to some embodiments of the invention;
Figure 5 illustrates a system where no connection to the internet is needed according to some embodiments of the invention although the same protocols and methods are used;
Figure 6 illustrates a system where communication modules are connected to an Internet server through the PSTN via a dial-up connection and an ISP according to some embodiments of the invention; and
Figure 7 illustrates a system similar to the system of Figure 6, but where wireless communication modules have been replaced by wired communication modules according to some embodiments of the invention.

### DETAILED DESCRIPTION OF THE DRAWINGS

Following is a detailed description of the drawings wherein reference numerals for like and corresponding elements are carried forward.

Embodiments of the invention provide a method and system of collecting data from remote terminal units using the Internet. Each terminal unit has a communication module connected thereto for sending the data to, and receiving commands and instructions from, an Internet server. The communication module includes an Internet or Internet-like client application executing thereon that is configured to conform the transmission of data to an Internet server using an Internet or Internet-like protocol. The data received by the Internet server is stored on a database thereof and is accessible to authorized personnel from almost any location via the worldwide Web.

For purposes of this description, the term "Internet-like" refers to the various Internet-based protocols that have been developed or are now being developed to enable wired and wireless devices alike to connect directly to the Internet. Also, the term "Internet server" refers to a server that supports and is capable of running Internet or Internet-like protocols such as Hyper Text Transfer Protocol (HTTP) and other suitable protocols. Thus, the Internet server does not necessarily have to be connected to the Internet and can be connected to, for example, a private network or some other network.

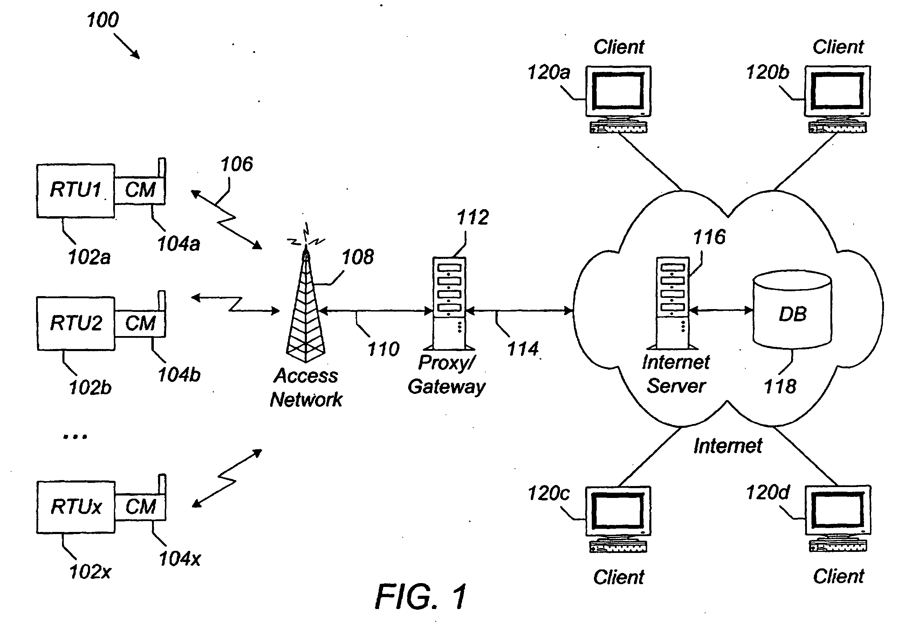

Referring now to Figure 1, a system 100 of collecting data from remote terminal units 102 and controlling the remote terminal units according to some embodiments of the invention is shown. The system 100 includes a plurality of remote terminal units 102a-102x (hereinafter, 102), each of which has a communication module 104a-104x (hereinafter, 104) either internally connected or externally connected thereto as shown. In some embodiments, the communication modules 104 are communication modules that are capable of transmitting and receiving data over a radio frequency interface 106 via an access network 108. The access network 108 may include any number of presently available access networks such as GSM, CDMA, and TDMA that provide different wireless bearer services like CSD, SMS, GPRS and the like, as well as soon to be developed access technologies.

The access network 108 is in turn connected via a network connection 110 to one or more proxy/gateway servers 112. The one or more proxy/gateway servers 112 operate to connect, via a network connection 114, the access network 108 to the Internet to thereby establish a communication path from the remote terminal units 102 to an Internet server 116. Examples of the one or more proxy/gateway servers 112 may include dedicated workstations or other high-end computers that are capable of linking a network such as the access network 108 to the internet.

The Internet server 116, in some embodiments, may be a Web server that is capable of hosting a Web site thereon and including any software programs or applications needed to maintain and operate the Web site. Such a Web site may be accessed by connecting to the Internet server 116 (e.g., via a modem or network connection) from any number of commercially available Web browser applications and opening the appropriate URL (Uniform Resource Locator). Examples of the Internet server 116, like the proxy/gateway servers 112, may include one or more dedicated workstations or other high-end computers that are capable of hosting a Web site thereon.

In some embodiments, the Internet server 116 is also capable of accessing one or more databases connected thereto. The database 118 serves as a repository for the collected data and other information needed to operate and maintain the Web site. More specifically, the database 118 stores the measurement and sensor data received from the remote terminal units 102 via the communication modules 104. Such data may then be accessed by clients and other authorized personnel, represented here by reference numerals 120a-120d, via any commercially available Web browser applications. Examples of the database 118 may include an Oracle™ database, a MS Access™, and the like, running on one or more dedicated workstations or high-end computers. Note that the database 118 is shown in Figure 1 as separate from the Internet server 116 for illustrative purposes only, and those of ordinary skill in the art will understand that, in some embodiments, the database 118 may be implemented as an integral part of the Internet server 116.

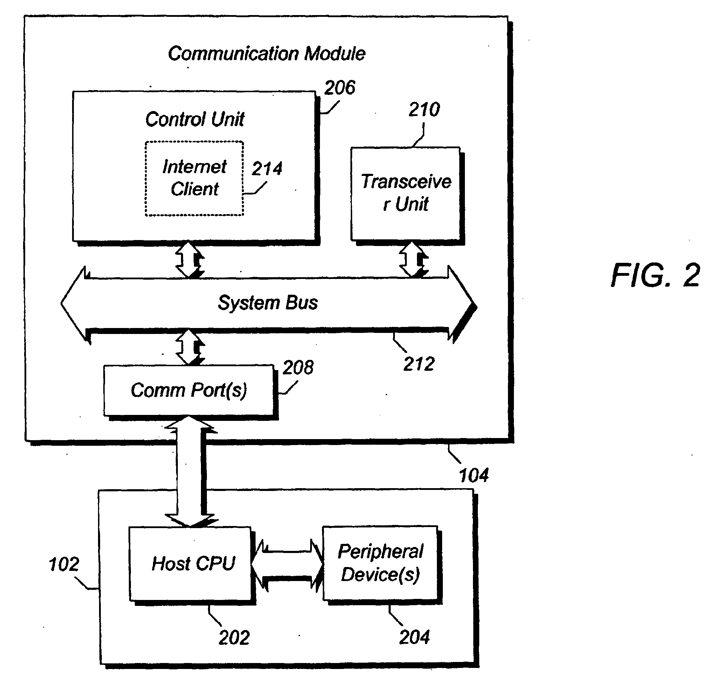

Figure 2 illustrates a functional block diagram of an exemplary remote terminal unit 102 and a communication module 104 according to some embodiments of the invention, both interconnected as shown. The remote terminal unit 102 has a number of functional components including a host CPU 202 which is responsible for the overall operation of the remote terminal unit 102 and the communication with, and control of, the communication module 104. One or more peripheral devices 204 are connected to the remote terminal unit 102 and may include various types of meters for measuring commodities such as electricity, gas, and the like, or other types of monitoring instruments such as sensors and alarms. Such instruments are preferably capable of outputting their data to, or otherwise being read by, the host CPU 202.

The host CPU 202 is configured to read or otherwise obtain the measurement and/or sensor data from the one or more peripheral devices 204. This data is thereafter provided by the host CPU 202 to the communication module 104 to be transmitted to the Internet server 116. The scheduling of the transmission may be set and modified as needed by the particular application residing in the remote terminal unit 102. For example, in some embodiments, the host CPU 202 can be configured to initiate the data transmission as each measurement event occurs in real-time, or at some predefined regular interval (e.g., once a month).

The communication module 104 also has a number of functional components therein including a control unit 206, a communication port 208, and a transceiver unit 210, all interconnected via a system bus 212, as shown. The transceiver unit 210 allows the communication module 104 to transmit and receive data to and from a central control unit. In some embodiments, the transceiver unit 210 is a radio transceiver unit that is capable of sending and receiving data over the radio frequency interface 106 using one of several available wireless bearer services. Likewise, the communication port 208 allows the communication module 104 to transmit and receive data over a serial connection. The control unit 206 controls the operation of the communication module 104 including the transmission and reception of data via the transceiver unit 210 and/or the communication port 208. Communication between the transceiver unit 210, communication port 208, and the control unit 206 is facilitated by the system bus 212.

Although presently available communication modules are capable of transmitting and receiving data using various wired and wireless bearer services, they are not capable of direct access to the Internet. Therefore, in accordance with some embodiments, the communication module 104 of the present invention includes an Internet or Internet-like client application 214 residing in the control unit 206. The Internet or Internet-like client application 214 is responsible for establishing a direct communication path to the Internet server 116. More specifically, the Internet or Internet-like client application 214 executes the protocols and procedures that allow the communication module 104 (hence, the remote terminal unit 102) to communicate directly with the Internet server 116. Examples of such an Internet or Internet-like client application 214 may include WAP based, HTTP based, and TCP/IP based client applications, or any other suitable Internet or Internet-like client application.

In some embodiments, the Internet or Internet-like client application 214 allows the Internet server 116 to transmit commands or instructions to the remote terminal unit 102. Thus, different remote terminal units 102 may be instructed to perform different tasks according to the data received therefrom. In this way, true bi-directional, near real-time communication can be established from the remote terminal unit 102 to the Internet server 116.

In some embodiments, the Internet or Internet-like client application 214 uses only the basic protocol stack (e.g., the WAP stack) and does not need a high-level browsing function. Most Internet applications include a browsing layer that interprets the transmitted data such that a human observer will be able to view the data in a user-friendly form. There are, however, some applications that are intended only for machine to machine (M2M) communications where the presentation of data is less important than the pure data content. In these applications, it is not necessary to include the browsing functionality because there is no one at the receiving end to observe the data. Thus, in the Internet or Internet-like client application 214 of the present invention, the browsing functionality can be deliberately disabled or otherwise omitted and only the basic protocol stack is used. An advantage of this arrangement is that any complications and/or interventions by the browsing layer are avoided. In addition, by using only the basic protocol stack, the communication module 104 can maintain compatibility with any future versions or revisions of the Internet or Internet-like protocol stack.

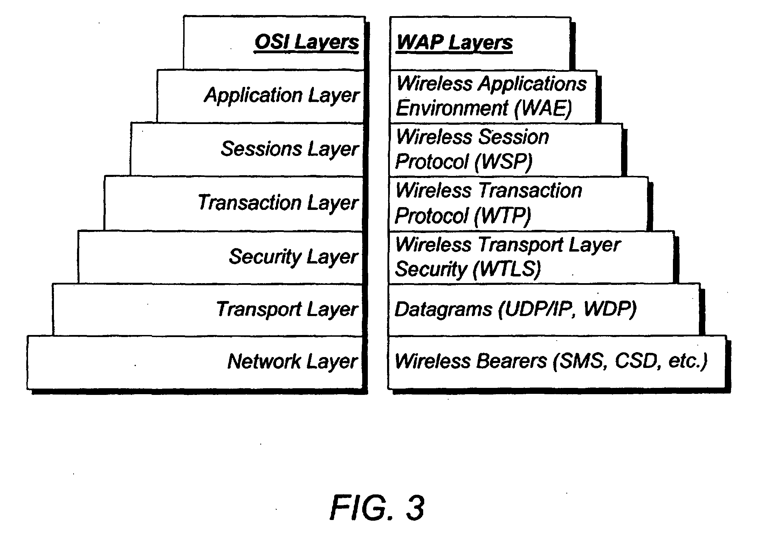

Moreover, where a WAP based client application is used, a "by-pass" of the applications layer of the WAP protocol stack may be achieved, in accordance with some embodiments of the invention. Figure 3 illustrates the layers of the standard WAP protocol stack and the corresponding layers of the standard OSI protocol stack. Most WAP based client applications may be considered to be as closed "black boxes," that is, they have an input and an output, but no intermediate entry or exit points. The input point in the WAP stack is the Wireless Application Environment (WAE) layer. By using an appropriate command, however, the WAE layer may be by-passed and the next layer, which is the Wireless Session Protocol (WSP) layer, can be accessed directly, as will now be explained.

In this illustration, the command that is used is a proprietary version of one of the Hayes™ modem "AT" commands. More specifically, the command that is used is "AT*E" immediately followed by "URL." This "AT*E" command is proprietary in the sense that it is not one of the standard Hayes™ modem "AT" commands, but is instead an especially created command for use with the communication module 104. As such, the communication module 104 will need to be specifically designed to properly receive and interpret this command or other similar commands.

When an event has occurred that causes the remote terminal unit 102 to want to send measurement data to the Internet server 116, the remote terminal unit 102 initiates a connection with the Internet server 116 through the communication module 104 by issuing the proprietary "AT*E" command. This command causes the WSP layer of the WAP based client application 214 in the communication module 104 to open a WSP session to the predefined URL (e.g., http://www.xyz.com) or an IP address (provided it is known) of the Internet server 116. More specifically, the WAP based client application 214 opens a WSP session from the communication module 104 to the proxy/gateway server 112, which subsequently opens an HTTP session to the Internet server 116. Thus, by using the "AT*E" command, the WSP layer may be accessed directly, thereby by-passing the WAE layer of the WAP protocol stack, to establish a connection with the Internet server 116. Note that the Internet or Internet-like client application 214 establishes the communication link to the proxy/gateway server before the WSP session is launched.

Once a connection to the Internet server 116 has been established, data may be sent from the remote terminal unit 102 to the Internet server 116, and instructions may be issued back to the remote terminal unit 102, by using the GET method of the WSP and HTTP protocols. The GET method uses a data format in which the data to be sent is in form of variable name and value pairs appended to the URL. The variable name and value pairs must be connected with an "=" sign and each name and value pair must be separated with an "&" sign. No blank spaces are allowed in the variable names or values. If a blank space is required, a "+" sign is used in this format to indicate the blank space. Thus, for example, the correct syntax to invoke a WSP/HTTP session to send the data shown in Table 1 is:

**TABLE 1 AT*EURL="http://www.xyz.com/data?Total+Kwh=25.78&Peak+Power=34.788"**

| *Variable Name* | *Value* |
|---|---|
| Total Kwh | 25.78 |
| Peak Power | 34.788 |

where the "?" indicates a separation between the URL and the data appended thereto.

Although the GET method is typically used in WSP and HTTP sessions to transmit data to a server, the POST method can be used in a similar manner for this purpose as well. The POST method is actually preferred when the amount of data to be transmitted is large.

Note that because the data is appended to the URL (in the GET method) and can therefore be seen by others on the Internet, security measures should be taken to prevent unauthorized access or tampering therewith. Security via encryption over the bearer service is generally available, but additional security is certainly advisable when communicating over the Internet. Thus, for example, data located in the URL may be encrypted with a transaction identification. In addition, or alternatively, the data may be encrypted with a public and a private key, which allows generally reliable data transmission over the Internet. The security layer within the Internet or Internet-like protocol stack itself should also be enabled or otherwise operative.

At the Internet server 116, the variable name and value pairs must be extracted in order to retrieve the data. One way in which this extraction can be done is by using CGI (Common Gateway Interface) scripts at the Internet server 116. CGI scripts are basically programs written in the C++, Perl, or any other suitable programming languages that reside on the Internet server 116 and that can be called from the client side, i.e., the remote terminal unit 102. A CGI script reads from the standard input message the particular method that has been used and the parameters that have been sent. The CGI script then executes its scripted function to extract the data, which is then stored by the Internet server 116 in the database 118. The CGI script thereafter uses the data or a portion thereof in a standard output message to send a response back to the invoking remote terminal unit 102. An exemplary response may be something like "OK. Passed Parameters=2. Last Passed Variable Name= Peak Power" to confirm the data was properly received.

In some embodiments, the Internet server 116 can also cause an instruction message to be sent to the remote terminal unit 102 via the CGI script. For example, in response to the data that was received, the Internet server 116 can request that the remote terminal unit 102 send another set of data in 10 hours by issuing the following instruction: "Next Report 10 Hrs."

Once the response message reaches the invoking communication module 104, the WAP based client application 214 processes the response and extracts the contents thereof including any instructions therein. The WAP based client application 214 thereafter sends the contents of the response message to the remote terminal unit 102 to carry out any instructions that may have been received from the Internet server.

After the remote terminal unit 102 receives confirmation from the Internet server 116 that the data has been received correctly, it can direct the communication module 104 to release the WSP session. Different methods can be used to release the session; for example, one of the "AT" modem commands such as "ATH" may be used to release the session.

Because there are likely to be many remote terminal units 102 sending data to the Internet server 116, each remote terminal unit 102 can be identified by a unique ID and storage space in the database 118 allocated according to that ID. Authorized clients or customers may view the data associated with their respective remote terminal units 102 or a predefined set of terminal units. Furthermore, because the data is stored on the Internet (i.e., a Web site), access may be obtained from essentially any location in the world virtually at any time. Such access may be in the form of HTML pages created "on-the-fly" by the Internet server 116 when the client/customer selects the appropriate data set. In addition, the data may be presented as raw data, or it may be compiled statistically for detection of trends and usage patterns, or a combination of both.

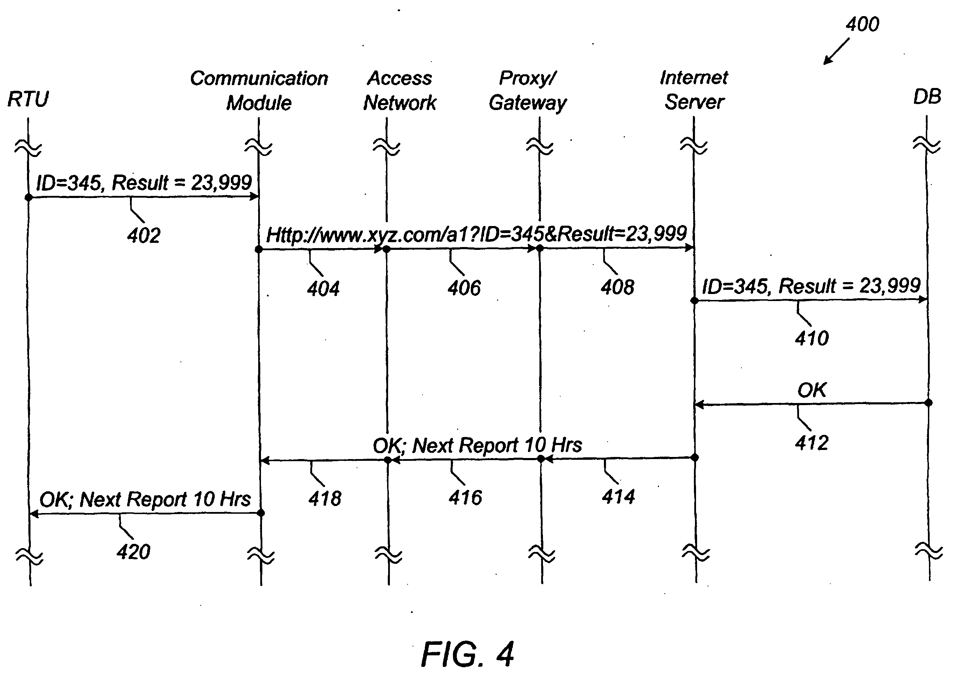

Figure 4 illustrates a flow diagram of a method 400 for collecting data from a plurality of remote terminal units and also for receiving information and instructions from the Internet server, according to some embodiments of the invention. The method begins at 402 where the remote terminal unit initiates a data transfer session by issuing, for example, the proprietary "AT*EURL" command including the URL, identification information, and the data to be transferred. The "AT*EURL" command causes the communication module to open a WSP session with the proxy/gateway via the access network at 404 and 406, respectively. The proxy/gateway thereafter opens an HTTP session with the Internet server at 408. The Internet server extracts the data included with the URL and stores it in the appropriate location in the database at 410. At 412, the database confirms to the Internet server that the data has been properly stored. The Internet server thereafter issues a confirmation message back to the communication module along with any commands or instructions at 414, 416, and 418, respectively. The communication module then relays the confirmation and the commands or instructions to the remote terminal unit at 420.

In the foregoing embodiments, it has been explained how the remote terminal unit can initiate a data transfer and subsequently receive a corresponding response. In some embodiments, the remote terminal unit, via the Internet-like client application residing in the communication module, can receive unsolicited communication from the Internet server. Thus, the Internet server can send command and instructions to the remote terminal unit without having to wait for the remote terminal unit to initiate a data transfer session. Such server-initiated communication can be effected using, for example, the PUSH method described in the WAP standard. The details of the PUSH method are well known to those of ordinary skill in the art and will not be described here except to say that the PUSH functionality requires the implementation of several protocols in both the wireless (remote terminal unit) and wired part (proxy/gateway, Internet server).

Where PUSH functionality is not supported, a paging system may be implemented over a bearer service to achieve similar results. Thus, when the Internet server wants to issue commands or instructions, or to get information from a remote terminal unit, it sends a page message (e.g., a phone call with three tones) via the SMS, CSD, or other bearer service. Upon receiving the page message, the remote terminal unit immediately launches a session to the Internet server, and the Internet server sends the desired command, instruction, or information to the remote terminal unit.

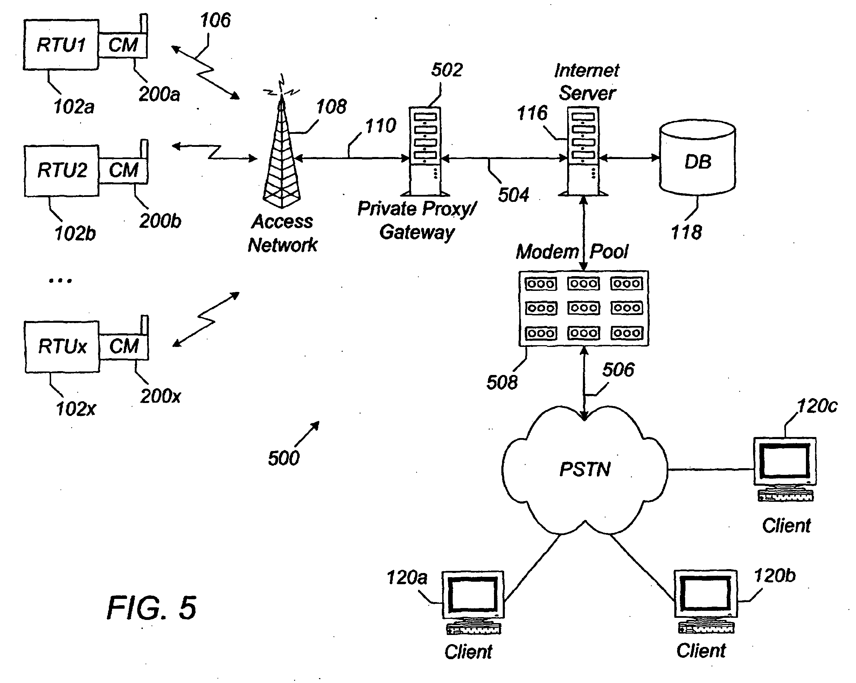

Figure 5 illustrates another system 500 of collecting data from remote terminal units and controlling the remote terminal units according to some embodiments of the invention. The system 500 of Figure 5 is similar to the system 100 of Figure 1 in that communication between the remote terminal unit 102 and the Internet server 116 is carried out according to an Internet or Internet-like protocol. However, in the system 500 of Figure 5, no connection to the Internet is needed by the remote terminal units 102, as access to the Internet server 116 is obtained through a private proxy/gateway server 502. The private proxy/gateway server 502 is different from the proxy/gateway server 112 of Figure 1 in that it sends all communication from/to the remote terminal units 102 over a dedicated connection 504 directly to/from the Internet server 116. Thus, communication between the remote terminal units 102 and the Internet server 116 is not routed through the various hubs, bridges, and other nodes of the Internet. Such an arrangement has a number of advantages including providing a more secure connection relative to a standard connection over the Internet.

Likewise, no Internet connection is needed for the one or more customers, clients, or other authorized personnel 120a-120c in order to access the Internet server. Such access may be obtained through the regular telephone lines 506 of the public switched telephone network (PSTN). A bank or pool of modems 508 connected to the Internet server 116 may be used to facilitate access to the Internet server 116 over the PSTN connection.

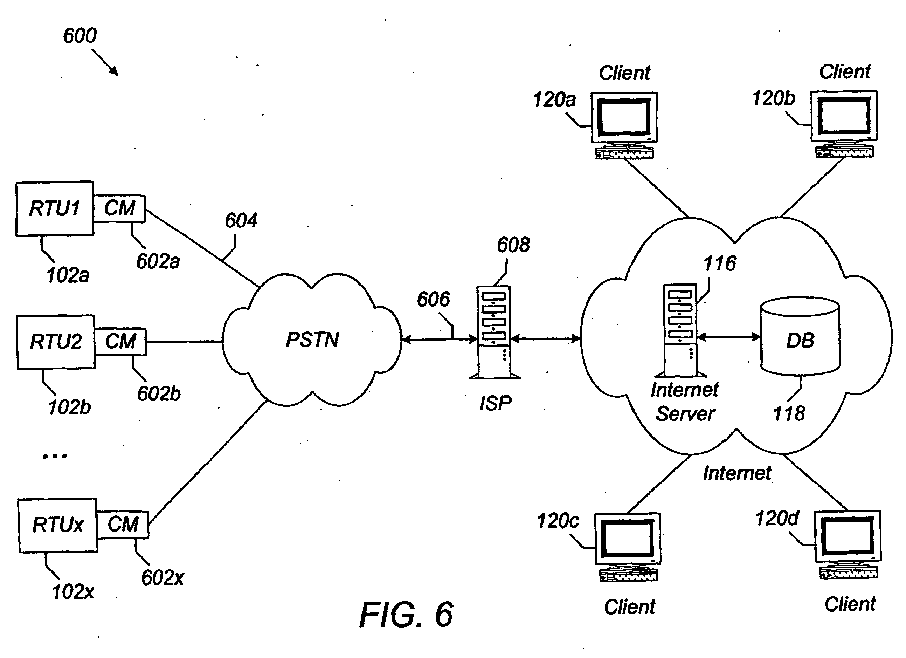

Figure 6 illustrates still another system 600 of collecting data from remote terminal units and controlling the remote terminal units according to some embodiments of the invention. In the system 600 of Figure 6, the wired communication modules 602a-602x (hereinafter, 602) are used to transmit and receive data to and from an Internet server 116. The wired communication modules 602 are similar to their wireless counterparts except that communication is carried over wire lines 604 instead of over the radio frequency interface using, for example, an analog modem for the PSTN, or an ADSL modem, or an ISDN modem, and the like. Also, connection to the internet server 116 is conducted in a manner similar to that described in the previous embodiments (see, e.g., Figure 1), but using the regular telephone lines 604 of the PSTN and an Internet Server Provider (ISP) 608. Alternatively a proxy/gateway could be intercalated before the ISP in case a WAP client is located within the wired communication modules.

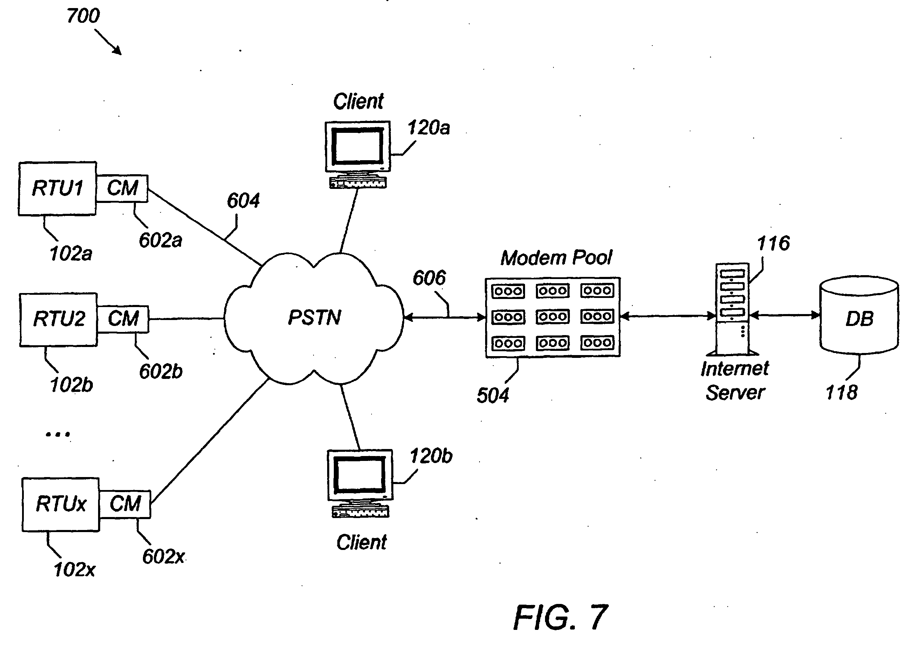

Figure 7 illustrates yet another system 700 of collecting data from remote terminal units and controlling the remote terminal units according to some embodiments of the invention. The system 700 of Figure 7 is similar to the system 500 of Figure 5 in that no Internet connection is needed. Instead, access to the Internet server 116 is facilitated by the use of the modem pool 504 in a manner known to those of ordinary skill in the art. The system 700 has all the advantages of both the system 500 and the system 600 of Figures 5 and 6, respectively, insofar as it is a combination of these two embodiments.

From the foregoing description, it can be seen that embodiments of the invention provide a method and system of collecting data from a plurality of remote terminal units using the Internet. Advantages of the invention include the provision of a total system architecture for collecting remote terminal unit measurements and data and for controlling the remote terminal unit from Internet server. The measurements and data are stored in a centralized location on the Internet and are thereby accessible from almost any location in the world via any commercially available Web browser applications. In addition to data collection, embodiments of the invention also provide true bi-directional, near real-time communication between the remote terminal unit and an Internet server, as well as server-initiated communication to the remote terminal unit. Use of the proprietary "AT*EURL" command allows the browsing layer of the WAP protocol stack (i.e., the WAE layer) to be by-passed and the WSP layer to be accessed directly. Moreover, because the system and method of the present invention includes an Internet or Internet-like client running in the communication module, any wireless bearer service may be used to transmit the data; i.e., bearer and network independence is achieved.

While a limited number of embodiments have been disclosed herein, those of ordinary skill in the art will recognize that variations and modifications from the described embodiments may be derived without departing from the scope of the invention. For example, although the invention has been described using the WAP protocol stack, the invention is not to be limited thereto, and any Internet-like protocol stack may be used. Also, because the higher layer WSP and HTTP protocols are used, modifications and improvements to the lower layer protocols may be implemented without substantially affecting the functionality of the whole system. In addition to the HTTP protocol, other protocols for sending data to a server such as FTP, SMTP and the like, may certainly be used with the appropriate treatment in the server side. Furthermore, although the invention has been described with respect to the URL of the Internet server, the IP address of the Internet server may certainly be used instead, Importantly, the invention is not only applicable to wireless communication, but also to any wired or wireless device connected to a communication system that allows connection to the Internet. What is more, although the invention has been described with respect to the "AT" modem command set, any ad-hoc defined command set may be equally applicable. Similarly, the invention is not to be limited to CGI scripts alone, but any other server side processing capability are also applicable. It should be noted that the UART interface was disclosed as an exemplary interface only, and that the invention is also applicable to any serial or parallel interface such as USB, Ethemet, PCMCIA, or any other similar interface. Finally, all numerical values disclosed herein are approximate values only regardless of whether the term "approximate" was used in describing the values. Accordingly, the appended claims are intended to cover all such variations and modifications as falling within the scope of the invention.

## Claims

1. A method of collecting data from a plurality of remote terminal units (102) using the Internet, said method comprising:
providing said data from each remote terminal unit (102) to a communication module (104) connected to said remote terminal unit (102), said communication module (104) having an Internet or Internet-like client application (214) executing thereon;
conforming said data to an Internet or Internet-like protocol via said Internet or Internet-like client application (214);
transmitting said data in accordance with said Internet or Internet-like protocol via said communication module (104) to an Internet server (116);
**characterised in that** the method further comprises:
storing said data in a database of said Internet server (116); and
issuing an acknowledgement message from said Internet server (116) to said remote terminal unit (102) via said communication module (104).

2. The method according to claim 1, further comprising issuing instructions from said Internet server to said remote terminal unit via said communication module.

3. The method according to claim 2, wherein said instructions are initiated by said Internet server independently of said remote terminal unit.

4. The method according to claim 1, wherein said transmission step includes said Internet or Internet-like client application establishing a communication link between said communication module and an Internet server.

5. The method according to claim 1, wherein said Internet or Internet-like protocol includes a Wireless Applications Protocol.

6. The method according to claim 1, wherein said transmission of said data is initiated using a modem-like control command to said communication module.

7. The method according to claim 6, wherein said modem-like control command is designed to initiate wireless protocol connection to the Internet.

8. The method according to claim 7, wherein said modem-like control command is used to bypass a browser layer of said wireless protocol.

9. The method according to claim 6, wherein data to be transmitted and an address indicator of said Internet server are appended to said modem-like control command.

10. The method according to claim 9, wherein said address indicator is a predetermined one of a Uniform Resource Locator and an IP address.

11. The method according to claim 1, wherein said transmission of said data to said Internet server may be performed over a wireless bearer service.

12. The method according to claim 1, wherein said transmission of said data to said Internet server may be performed over a wired data service.

13. The method according to claim 1, wherein said database is capable of being accessed via an Internet connection.

14. A system of collecting data from a plurality of remote terminal units using the Internet, comprising;
an Internet server (116) configured to receive said data from said plurality of remote terminal units (102);
a communication module (104) connected to each remote terminal unit (102) and configured to transmit said data in accordance with an Internet or Internet-like protocol to said Internet server (116); and
an Internet or Internet-like client application (214) residing in said communication module (104) and configured to conform said data to said Internet or Internet-like protocol;
**characterised in that** the system further comprises:
a database (118) connected to said Internet server (116) and adapted to store said data received by said Internet server (116);
wherein the Internet server (116) is further configured to issue acknowledgement messages to said remote terminal units (102).

15. The system according to claim 14, wherein said Internet server (116) is further configured to issue instructions to said remote terminal unit (102) via said communication module (104).

16. The system according to claim 15, wherein said instructions are initiated by said Internet server (116) independently of said remote terminal unit (102).

17. The system according to claim 14, wherein said Internet or Internet-like client application (214) is configured to establish a communication link between said communication module (104) and an Internet server (116).

18. The system according to claim 14, wherein said Internet or Internet-like protocol includes a Wireless Applications Protocol.

19. The system according to claim 14, wherein said remote terminal unit (102) is configured to initiate said data transmission using a modem-like control command to said communication module (104).

20. The system according to claim 19, wherein said modem-like control command is designed to initiate a wireless protocol connection to the Internet.

21. The system according to claim 20, wherein said modem-like control command is used to bypass a browser layer of said wireless protocol.

22. The system according to claim 19, wherein data to be transmitted and an address indicator of said Internet server (116) are appended to said modem-like control command.

23. The system according to claim 14, wherein said address indicator is a predetermined one of a Uniform Resource Locator and an IP address.

24. The system according to claim 14, wherein transmission of said data to said Internet server (116) may be performed over a wireless bearer service.

25. The system according to claim 14, wherein transmission of said data to said Internet server (116) may be performed over a wired data service.

26. The system according to claim 14, wherein said database (118) is capable of being accessed via an Internet connection.

27. A method of operating a communication module (104) connected to a remote terminal unit (102) to control the remote terminal unit (102) using Internet or Internet-like protocols, said method comprising:
establishing a connection between the communication module (104) and an Internet server (116) in accordance with an Internet or Internet-like protocol;
**characterised in that** the method further comprises:
receiving an instruction message from said Internet server (116) over said connection;
processing said instruction message using an Internet or Internet-like client application executing on said communication module (104); and
providing a content of said instruction message to said remote terminal unit (102).

28. The method according to claim 27, wherein said instruction message is initiated by said Internet server independently of said remote terminal unit.

29. The method according to claim 27, wherein said Internet or Internet-like client application is configured to establish a communication link between said communication module and an Internet server.

30. The method according to claim 27, wherein said Internet or Internet-like protocol includes a Wireless Applications Protocol.

31. The method according to claim 27, wherein said connection to said Internet server is established over a wireless bearer service.

32. The method according to claim 27, wherein said connection to said Internet server is established over a wired data service.

33. A communication module (104) for connection to a remote terminal unit (102) so that the remote terminal unit (102) is controlled using Internet or Internet-like protocols, the communication module comprising:
a transceiver unit (210) configured to establish a connection between said remote terminal unit (102) and an Internet server (116) in accordance with an Internet or Internet-like protocol;
**characterised in that** the communication module (104) further comprises:
a control unit (206) having an Internet or Internet-like client application (214) executing therein, said application being configured to process an instruction message received from said Internet server (116) over said connection and provide a content of said instruction message to said remote terminal unit (102).

34. The communication module according to claim 33, wherein said instruction message is initiated by said Internet server (116) independently of said remote terminal unit (102).

35. The communication module according to claim 33, wherein said Internet or Internet-like client application (214) is configured to establish a communication link between said communication module (104) and an Internet server (116).

36. The communication module according to claim 33, wherein said Internet or Internet-like protocol includes a Wireless Applications Protocol.

37. The communication module according to claim 33, wherein said connection to said Internet server (116) is established over a wireless bearer service.

38. The communication module according to claim 33, wherein said connection to said Internet server (116) is established over a wired data service.

## Patentansprüche

1. Verfahren zum Erfassen von Daten von mehreren räumlich abgesetzten Endgeräten (102) unter Verwendung des Internet, wobei das Verfahren Folgendes umfasst:
Übermitteln der Daten von jedem räumlich abgesetzten Endgerät (102) zu einem Kommunikationsmodul (104), das mit dem räumlich abgesetzten Endgerät (102) verbunden ist, wobei auf dem Kommunikationsmodul (104) eine Internet- oder internetartige Clientanwendung (214) ausgeführt wird;
Anpassen der Daten an ein Internet- oder internetartiges Protokoll über die Internet- oder internetartige Clientanwendung (214);
Senden der Daten gemäß dem Internet- oder internetartigen Protokoll über das Kommunikationsmodul (104) an einen Internetserver (116);
**dadurch gekennzeichnet, dass** das Verfahren des Weiteren Folgendes umfasst:
Speichern der Daten in einer Datenbank des Internetservers (116); und
Ausgeben einer Bestätigungsmeldung von dem Internetserver (116) über das Kommunikationsmodul (104) zu dem räumlich abgesetzten Endgerät (102).

2. Verfahren nach Anspruch 1, das des Weiteren das Ausgeben von Anweisungen von dem Internetserver über das Kommunikationsmodul zu dem räumlich abgesetzten Endgerät umfasst.

3. Verfahren nach Anspruch 2, wobei die Anweisungen durch den Internetserver unabhängig von dem räumlich abgesetzten Endgerät initiiert werden.

4. Verfahren nach Anspruch 1, wobei der Übertragungsschritt beinhaltet, dass die Internet- oder internetartige Clientanwendung eine Kommunikationsverbindung zwischen dem Kommunikationsmodul und einem Internetserver aufbaut.

5. Verfahren nach Anspruch 1, wobei das Internet- oder internetartige Protokoll ein Wireless Applications Protocol enthält.

6. Verfahren nach Anspruch 1, wobei die Übertragung der Daten unter Verwendung eines modemartigen Steuerbefehls an das Kommunikationsmodul initiiert wird.

7. Verfahren nach Anspruch 6, wobei der modemartige Steuerbefehl dafür konfiguriert ist, eine Drahtlosprotokollverbindung zum Internet zu initiieren.

8. Verfahren nach Anspruch 7, wobei der modemartige Steuerbefehl dafür verwendet wird, eine Browserschicht des Drahtlosprotokolls zu umgehen.

9. Verfahren nach Anspruch 6, wobei zu sendende Daten und ein Adressindikator des Internetservers an den modemartigen Steuerbefehl angehängt werden.

10. Verfahren nach Anspruch 9, wobei der Adressindikator als ein Uniform Resource Locator oder eine IP-Adresse vorgegeben ist.

11. Verfahren nach Anspruch 1, wobei die Übertragung der Daten zu dem Internetserver über einen drahtlosen Trägerdienst erfolgen kann.

12. Verfahren nach Anspruch 1, wobei die Übertragung der Daten zu dem Internetserver über einen drahtgebundenen Datendienst erfolgen kann.

13. Verfahren nach Anspruch 1, wobei über eine Internetverbindung auf die Datenbank zugegriffen werden kann.

14. System zum Erfassen von Daten von mehreren räumlich abgesetzten Endgeräten unter Verwendung des Internet, wobei das System Folgendes umfasst:
einen Internetserver (116), der dafür konfiguriert ist, die Daten von den mehreren räumlich abgesetzten Endgeräten (102) zu empfangen;
ein Kommunikationsmodul (104), das mit jedem räumlich abgesetzten Endgerät (102) verbunden ist und dafür konfiguriert ist, die Daten gemäß einem Internet- oder internetartigen Protokoll an den Internetserver (116) zu senden; und
eine Internet- oder internetartige Clientanwendung (214), die sich in dem Kommunikationsmodul (104) befindet und dafür konfiguriert ist, die Daten an das Internet- oder internetartige Protokoll anzupassen;
**dadurch gekennzeichnet, dass** das System des Weiteren Folgendes umfasst:
eine Datenbank (118), die mit dem Internetserver (116) verbunden ist und dafür geeignet ist, die von dem Internetserver (116) empfangenen Daten zu speichern; wobei der Internetserver (116) des Weiteren dafür konfiguriert ist, Bestätigungsmeldungen an die räumlich abgesetzten Endgeräte (102) auszugeben.

15. System nach Anspruch 14, wobei der Internetserver (116) des Weiteren dafür konfiguriert ist, über das Kommunikationsmodul (104) Anweisungen an das räumlich abgesetzte Endgerät (102) auszugeben.

16. System nach Anspruch 15, wobei die Anweisungen durch den Internetserver (116) unabhängig von dem räumlich abgesetzten Endgerät (102) initiiert werden.

17. System nach Anspruch 14, wobei die Internet- oder internetartige Clientanwendung (214) dafür konfiguriert ist, eine Kommunikationsverbindung zwischen dem Kommunikationsmodul (104) und einem Internetserver (116) aufzubauen.

18. System nach Anspruch 14, wobei das Internet- oder internetartige Protokoll ein Wireless Applications Protocol enthält.

19. System nach Anspruch 14, wobei das räumlich abgesetzte Endgerät (102) dafür konfiguriert ist, die Datenübertragung unter Verwendung eines modemartigen Steuerbefehls an das Kommunikationsmodul (104) zu initiieren.

20. System nach Anspruch 19, wobei der modemartige Steuerbefehl dafür konfiguriert ist, eine Drahtlosprotokollverbindung zum Internet zu initiieren.

21. System nach Anspruch 20, wobei der modemartige Steuerbefehl dafür verwendet wird, eine Browserschicht des Drahtlosprotokolls zu umgehen.

22. System nach Anspruch 19, wobei zu sendende Daten und ein Adressindikator des Internetservers (116) an den modemartigen Steuerbefehl angehängt werden.

23. System nach Anspruch 14, wobei der Adressindikator als ein Uniform Resource Locator oder eine IP-Adresse vorgegeben ist.

24. System nach Anspruch 14, wobei die Übertragung der Daten zu dem Internetserver (116) über einen drahtlosen Trägerdienst erfolgen kann.

25. System nach Anspruch 14, wobei die Übertragung der Daten zu dem Internetserver(116) über einen drahtgebundenen Datendienst erfolgen kann.

26. System nach Anspruch 14, wobei über eine Internetverbindung auf die Datenbank (118) zugegriffen werden kann.

27. Verfahren zum Betreiben eines Kommunikationsmoduls (104), das mit einem räumlich abgesetzten Endgerät (102) verbunden ist, um das räumlich abgesetzte Endgerät (102) unter Verwendung von Internet- oder internetartigen Protokollen zu steuern, wobei das Verfahren Folgendes umfasst:
Aufbauen einer Verbindung zwischen dem Kommunikationsmodul (104) und einem Internetserver (116) gemäß einem Internet- oder internetartigen Protokoll;
dergestalt, dass das Verfahren des Weiteren Folgendes umfasst:
Empfangen einer Anweisungsmeldung von dem Internetserver (116) über die Verbindung;
Verarbeiten der Anweisungsmeldung mittels einer Internet- oder internetartigen Clientanwendung, die auf dem Kommunikationsmodul (104) ausgeführt wird; und
Übermitteln eines Inhalts der Anweisungsmeldung an das räumlich abgesetzte Endgerät (102).

28. Verfahren nach Anspruch 27, wobei die Anweisungsmeldung durch den Internetserver unabhängig von dem räumlich abgesetzten Endgerät initiiert wird.

29. Verfahren nach Anspruch 27, wobei die Internet- oder internetartige Clientanwendung dafür konfiguriert ist, eine Kommunikationsverbindung zwischen dem Kommunikationsmodul und einem Internetserver aufzubauen.

30. Verfahren nach Anspruch 27, wobei das Internet- oder internetartige Protokoll ein Wireless Applications Protocol enthält.

31. Verfahren nach Anspruch 27, wobei die Verbindung zu dem Internetserver über einen drahtlosen Trägerdienst aufgebaut wird.

32. Verfahren nach Anspruch 27, wobei die Verbindung zu dem Internetserver über einen drahtgebundenen Datendienst aufgebaut wird.

33. Kommunikationsmodul (104) zum Verbinden mit einem räumlich abgesetzten Endgerät (102), dergestalt, dass das räumlich abgesetzte Endgerät (102) mittels des Internet- oder internetartigen Protokolls gesteuert wird, wobei das Kommunikationsmodul Folgendes umfasst:
eine Transceiver-Einheit (210), die dafür konfiguriert ist, eine Verbindung zwischen dem räumlich abgesetzten Endgerät (102) und einem Internetserver (116) gemäß einem Internet- oder internetartigen Protokoll aufzubauen;
**dadurch gekennzeichnet, dass** das Kommunikationsmodul (104) des Weiteren Folgendes umfasst:
eine Steuereinheit (206) mit einer Internet- oder internetartigen Clientanwendung (214), die in der Steuereinheit (206) ausgeführt wird, wobei diese Anwendung dafür konfiguriert ist, eine Anweisungsmeldung zu verarbeiten, die von dem Internetserver (116) über die Verbindung empfangen wurde, und einen Inhalt der Anweisungsmeldung an das räumlich abgesetzte Endgerät (102) zu übermitteln.

34. Kommunikationsmodul nach Anspruch 33, wobei die Anweisungsmeldung durch den Internetserver (116) unabhängig von dem räumlich abgesetzten Endgerät (102) initiiert wird.

35. Kommunikationsmodul nach Anspruch 33, wobei die Internet- oder internetartige Clientanwendung (214) dafür konfiguriert ist, eine Kommunikationsverbindung zwischen dem Kommunikationsmodul (104) und einem Internetserver (116) aufzubauen.

36. Kommunikationsmodul nach Anspruch 33, wobei das Internet- oder internetartige Protokoll ein Wireless Applications Protocol enthält.

37. Kommunikationsmodul nach Anspruch 33, wobei die Verbindung zu dem Internetserver (116) über einen drahtlosen Trägerdienst aufgebaut wird.

38. Kommunikationsmodul nach Anspruch 33, wobei die Verbindung zu dem Internetserver (116) über einen drahtgebundenen Datendienst aufgebaut wird.

## Revendications

1. Procédé de collecte de données auprès d'une pluralité d'unités terminales distantes (102) en utilisant l'internet, ledit procédé comprenant les étapes consistant à :
fournir lesdites données entre chaque unité terminale distante (102) et un module de communication (104) connecté à ladite unité terminale distante (102), ledit module de communication (104) possédant une application cliente internet ou de type internet (214) qui s'exécute sur celui-ci ;
rendre lesdites données conformes à un protocole internet ou de type internet à l'aide de ladite application cliente internet ou de type internet (214) ;
transmettre lesdites données conformément audit protocole internet ou de type internet via ledit module de communication (104) vers un serveur internet (116) ;
**caractérisé en ce que** le procédé comprend en outre les étapes consistant à :
stocker lesdites données dans une base de données dudit serveur internet (116) ; et
envoyer un message d'accusé de réception entre ledit serveur internet (116) et ladite unité terminale distante (102), via ledit module de communication (104).

2. Procédé selon la revendication 1, comprenant en outre l'étape consistant à envoyer des instructions entre ledit serveur internet et ladite unité terminale distante via ledit module de communication.

3. Procédé selon la revendication '2, dans lequel lesdites instructions sont lancées par ledit serveur internet indépendamment de ladite unité terminale distante.

4. Procédé selon la revendication 1, dans lequel ladite étape de transmission comprend le fait, pour ladite application cliente internet ou de type internet, d'établir une liaison de communication entre ledit module de communication et un serveur internet.

5. Procédé selon la revendication 1, dans lequel ledit protocole internet ou de type internet comprend un protocole d'applications sans fil.

6. Procédé selon la revendication 1, dans lequel ladite transmission desdites données est lancée à l'aide d'une instruction de commande de type modem donnée audit module de communication.

7. Procédé selon la revendication 6, dans lequel ladite instruction de commande de type modem est conçue pour établir une connexion avec l'internet selon un protocole sans fil.

8. Procédé selon la revendication 7, dans lequel ladite instruction de commande de type modem est utilisée pour court-circuiter une couche de navigateur dudit protocole sans fil.

9. Procédé selon la revendication 6, dans lequel des données à transmettre et un indicateur d'adresse dudit serveur internet sont ajoutés à ladite instruction de commande de type modem.

10. Procédé selon la revendication 9, dans lequel ledit indicateur d'adresse est un élément prédéterminé parmi une adresse uniforme de ressource et une adresse IP.

11. Procédé selon la revendication 1, dans lequel ladite transmission desdites données vers ledit serveur internet peut être effectuée sur un service de support sans fil.

12. Procédé selon la revendication 1, dans lequel ladite transmission desdites données vers ledit serveur internet peut être effectuée sur un service de données filaire.

13. Procédé selon la revendication 1, dans lequel il est possible d'accéder à ladite base de données via une connexion internet.

14. Système de collecte de données auprès d'une pluralité d'unités terminales distantes en utilisant l'internet, comprenant :
un serveur internet (116) configuré pour recevoir lesdites données depuis ladite pluralité d'unités terminales distantes (102) ;
un module de communication (104) connecté à chaque unité terminale distante (102) et configuré pour transmettre lesdites données selon un protocole internet ou de type internet vers ledit serveur internet (116) ; et
une application cliente internet ou de type internet (214) résidant dans ledit module de communication (104) et configurée pour rendre lesdites données conformes audit protocole internet ou de type internet ;
**caractérisé en ce que** le système comprend en outre :
une base de données (118) connectée audit serveur internet (116) et conçue pour stocker lesdites données reçues par ledit serveur internet (116) ;
le serveur internet (116) étant en outre configuré pour envoyer des messages d'accusé de réception vers lesdites unités terminales distantes (102).

15. Système selon la revendication 14, dans lequel ledit serveur internet (116) est en outre configuré pour envoyer des instructions à ladite unité terminale distante (102) via ledit module de communication (104).

16. Système selon la revendication 15, dans lequel lesdites instructions sont lancées par ledit serveur internet (116), indépendamment de ladite unité terminale distante (102).

17. Système selon la revendication 14, dans lequel ladite application cliente internet ou de type internet (214) est configurée pour établir une liaison de communication entre ledit module de communication (104) et un serveur internet (116).

18. Système selon la revendication 14, dans lequel ledit protocole internet ou de type internet comprend un protocole d'applications sans fil.

19. Système selon la revendication 14, dans lequel ladite unité terminale distante (102) est configurée pour lancer ladite transmission de données en utilisant une instruction de commande de type modem donnée audit module de communication (104).

20. Système selon la revendication 19, dans lequel ladite instruction de commande de type modem est conçue pour établir une connexion avec l'internet selon un protocole sans fil.

21. Système selon la revendication 20, dans lequel ladite instruction de commande de type modem est utilisée pour court-circuiter une couche de navigateur dudit protocole sans fil.

22. Système selon la revendication 19, dans lequel des données à transmettre et un indicateur d'adresse dudit serveur internet (116) sont ajoutés à ladite instruction de commande de type modem.

23. Système selon la revendication 14, dans lequel ledit indicateur d'adresse est un élément prédéterminé parmi une adresse uniforme de ressource et une adresse IP.

24. Système selon la revendication 14, dans lequel la transmission desdites données vers ledit serveur internet (116) peut être effectuée sur un service de support sans fil.

25. Système selon la revendication 14, dans lequel la transmission desdites données vers ledit serveur internet (116) peut être effectuée sur un service de données filaire.

26. Système selon la revendication 14, dans lequel il est possible d'accéder à ladite base de données (118) via une connexion internet.

27. Procédé d'exploitation d'un module de communication (104) connecté à une unité terminale distante (102) afin de commander l'unité terminale distante (102) en utilisant des protocoles internet ou de type internet, ledit procédé comprenant l'étape consistant à :
établir une connexion entre le module de communication (104) et un serveur internet (116), selon un protocole internet ou de type internet ;
**caractérisé en ce que** le procédé comprend en outre les étapes consistant à :
recevoir un message d'instruction dudit serveur internet (116) sur ladite connexion ;
traiter ledit message d'instruction en utilisant une application cliente internet ou de type internet qui s'exécute sur ledit module de communication (104) ; et
fournir un contenu dudit message d'instruction à ladite unité terminale distante (102).

28. Procédé selon la revendication 27, dans lequel ledit message d'instruction est lancé par ledit serveur internet indépendamment de ladite unité terminale distante.

29. Procédé selon la revendication 27, dans lequel ladite application cliente internet ou de type internet est configurée pour établir une liaison de communication entre ledit module de communication et un serveur internet.

30. Procédé selon la revendication 27, dans lequel ledit protocole internet ou de type internet comprend un protocole d'applications sans fil.

31. Procédé selon la revendication 27, dans lequel ladite connexion audit serveur internet est établie sur un service de support sans fil.

32. Procédé selon la revendication 27, dans lequel ladite connexion audit serveur internet est établie sur un service de données filaire.

33. Module de communication (104) destiné à être connecté à une unité terminale distante (102) afin que l'unité terminale distante (102) soit commandée en utilisant des protocoles internet ou de type internet, le module de communication comprenant :
une unité d'émetteur-récepteur (210) configurée pour établir une connexion entre ladite unité terminale distante (102) et un serveur internet (116) selon un protocole internet ou de type internet ;
**caractérisé en ce que** le module de communication (104) comprend en outre :
une unité de commande (206) ayant une application cliente internet ou de type internet (214) qui s'exécute sur celle-ci, ladite application étant configurée pour traiter un message d'instruction reçu dudit serveur internet (116) sur ladite connexion et pour fournir un contenu dudit message d'instruction à ladite unité terminale distante (102).

34. Module de communication selon la revendication 33, dans lequel ledit message d'instruction est lancé par ledit serveur internet (116), indépendamment de ladite unité terminale distante (102).

35. Module de communication selon la revendication 33, dans lequel ladite application cliente internet ou de type internet (214) est configurée pour établir une liaison de communication entre ledit module de communication (104) et un serveur internet (116).

36. Module de communication selon la revendication 33, dans lequel ledit protocole internet ou de type internet comprend un protocole d'applications sans fil.

37. Module de communication selon la revendication 33, dans lequel ladite connexion audit serveur internet (116) est établie sur un service de support sans fil.

38. Module de communication selon la revendication 33, dans lequel ladite connexion audit serveur internet (116) est établie sur un service de données filaire.
